# EUROPÄISCHE PATENTSCHRIFT

(11) **EP 3 781 351 B1**
(45) Veröffentlichungstag und Bekanntmachung des Hinweises auf die Patenterteilung: **09.08.2023**
(21) Anmeldenummer: 19722526.1
(22) Anmeldetag: 18.04.2019
(51) Int. Cl.: B23Q 1/52, B23Q 1/70, B23Q 5/06, B23Q 17/22

(54) **DRUCKGASBETRIEBENE VORRICHTUNG UND DRUCKGASBEARBEITUNGSSYSTEM**
PRESSURISED-GAS-OPERATED DEVICE AND PRESSURISED GAS PROCESSING SYSTEM
DISPOSITIF ACTIONNÉ PAR UN GAZ SOUS PRESSION ET SYSTÈME D'USINAGE À GAZ SOUS PRESSION

(30) Priorität: 20.04.2018 DE 102018109573
(43) Veröffentlichungstag der Anmeldung: 24.02.2021
(73) Patentinhaber: MD Drucklufttechnik GmbH & Co. Kg, 71272 Renningen (DE)
(72) Erfinder: BAY, Claus-Werner, 71263 Weil der Stadt (DE)
(74) Vertreter: DTS Patent- und Rechtsanwälte Schnekenbühl und Partner mbB
(86) Internationale Anmeldenummer: PCT/EP2019/060073
(87) Internationale Veröffentlichungsnummer: WO 2019/202074

(56) Entgegenhaltungen:
- DE-A1-102016 115 930
- DE-U1-202006 020 273
- DE-U1-202007 016 740

## Beschreibung

Die vorliegende Erfindung betrifft eine druckgasbetriebene Vorrichtung, welche eine Werkzeugeinheit und eine Aufnahmeeinheit zur Aufnahme der Werkzeugeinheit umfasst, wobei die Werkzeugeinheit einen Stator und einen relativ zu dem Stator unter Beaufschlagung mit Druckgas um eine Drehachse drehbar antreibbaren Rotor umfasst, wobei die Werkzeugeinheit relativ zu der Aufnahmeeinheit aus einer mittels der Aufnahmeeinheit vorgebbaren Ausgangsposition in eine oder mehrere Auslenkungspositionen auslenkbar ist, wobei die Vorrichtung eine Sensoreinrichtung zur Ermittlung eines Auslenkungszustands der Werkzeugeinheit relativ zu der Aufnahmeeinheit umfasst, und wobei mittels der Sensoreinrichtung eine Auslenkungsposition der Werkzeugeinheit relativ zur Aufnahmeeinheit ermittelbar ist.

Außerdem betrifft die vorliegende Erfindung ein Druckgasbearbeitungssystem, welches eine druckgasbetriebene Vorrichtung und eine bewegbar ausgebildete und/oder ansteuerbare Halteeinrichtung umfasst.

Für druckgasbetriebene Vorrichtungen existieren unterschiedlichste Anwendungsgebiete, insbesondere im Bereich der industriellen Fertigung und Bearbeitung von Werkstücken. Gängig ist der Einsatz von druckgasbetriebenen Vorrichtungen zum Antreiben eines Bearbeitungswerkzeugs. Hierbei sind Schleif-, Polier-, Entgrat- oder Fräswerkzeuge beispielhaft zu nennen. Bekannt sind handgeführte druckgasbetriebene Vorrichtungen ebenso wie die Festlegung derartiger Vorrichtungen an einer maschinell bewegbaren Halteeinrichtung wie zum Beispiel einem Roboterarm. Nicht-handgeführte druckgasbetriebene Vorrichtungen an maschinell bewegbaren Halteeinrichtungen können in Arbeitsbereichen angeordnet sein, die nicht eingesehen werden können oder die aus konstruktiven Gründen oder aus Gründen des Arbeitsschutzes während des Betriebes nicht zugänglich sind. Eingangs genannte druckgasbetriebene Vorrichtungen haben sich in der Praxis aufgrund ihrer Auslenkbarkeit zur Anpassung an Bauteilgeometrien, insbesondere wegen auftretender Bauteiltoleranzen, bewährt, wobei durch die Auslenkbarkeit der Werkzeugeinheit gegenüber der Aufnahmeeinheit Bauteilungenauigkeiten bei der Bearbeitung kompensiert werden können.

Wünschenswert wäre es jedoch, auch fehlerhafte Bauteile, eine Abnutzung eines Bearbeitungswerkzeugs und/oder eine fehlerhafte Bedienung einer druckgasbetriebenen Vorrichtung erkennen zu können.

Die DE 20 2007 016 740 U1 und die DE 20 2006 020 273 U1, die die Basis für den Oberbegriff des Anspruchs 1 bilden, beschreiben mit Druckluft angetriebene Vorrichtungen zum Entgraten von Werkstücken. Ein Druckluftwerkzeug mit einer Spindel ist dabei relativ zu einem Gehäuse um eine Pendelachse verschwenkbar, wobei über einen Sensor der Winkel zwischen dem Werkzeug und dem Gehäuse bestimmt werden kann.

Der vorliegenden Erfindung liegt daher die Aufgabe zugrunde, eine gattungsgemäße druckgasbetriebene Vorrichtung und ein Druckgasbearbeitungssystem bereitzustellen, mit der bzw. mit dem eine erhöhte Prozesssicherheit gewährleistet werden kann.

Diese Aufgabe wird bei einer druckgasbetriebenen Vorrichtung der eingangs genannten Art erfindungsgemäß mit den Merkmalen des kennzeichnenden Teils von Anspruch 1 gelöst.

Bei der erfindungsgemäßen druckgasbetriebenen Vorrichtung kann mittels der Sensoreinrichtung festgestellt werden, ob und vorzugsweise wie weit die Werkzeugeinheit relativ zur Ausgangsposition gegenüber der Aufnahmeeinheit ausgelenkt ist. Dies gibt auf handhabungsfreundliche und zuverlässige Weise die Möglichkeit, nähere Informationen über den Betriebszustand, insbesondere über den Auslenkungszustand, der druckgasbetriebenen Vorrichtung zu erhalten. Eine Ermittlung des Auslenkungszustands der Werkzeugeinheit relativ zu der Aufnahmeeinheit ist insbesondere dann von Vorteil, wenn die druckgasbetriebene Vorrichtung beispielsweise beim Einlernen, dem sogenannten "Teachen", durch einen Benutzer, einen sogenannten "Integrator", entlang einer Bauteilkontur geführt wird und/oder wenn die druckgasbetriebene Vorrichtung im bestimmungsgemäßen Gebrauch mittels einer maschinell bewegbaren Halteeinrichtung wie zum Beispiel einem Roboterarm geführt wird. Durch Vorsehen der Sensoreinrichtung kann beispielsweise aufgrund des ermittelten Auslenkungszustands auf eine vorliegende Bauteilqualität, einen Abnutzungsgrad eines Bearbeitungswerkzeugs und/oder auf eine fehlerhafte Bedienung geschlossen werden. Beispielsweise können eine schlechte Bauteilqualität, ein abgenutztes Bearbeitungswerkzeug (beispielsweise durch das abgenutzte Bearbeitungswerkzeug erzeugte Rattermarken an einer Bauteiloberfläche) und/oder eine Fehlbedienung, insbesondere durch übermäßige Kraftbeaufschlagung, zu unzulässigen Auslenkungszuständen der Werkzeugeinheit relativ zu der Aufnahmeeinheit führen können.

Als Druckgas für die Vorrichtung kann insbesondere Druckluft verwendet werden. Die druckgasbetriebene Vorrichtung ist oder bildet daher insbesondere eine Druckluftspindel.

Vorzugsweise bildet die Aufnahmeeinheit zumindest einen Teil eines Gehäuses der Vorrichtung.

An dem Rotor der Werkzeugeinheit ist insbesondere ein Bearbeitungswerkzeug zum Antreiben desselben festgelegt oder festlegbar, beispielsweise ein Fräswerkzeug, ein Entgratungswerkzeug oder ein Schleifwerkzeug, insbesondere an einem Anschlussabschnitt des Rotors.

Vorzugsweise bilden der Rotor und der Stator gemeinsam in an sich bekannter Weise einen Druckgasmotor, welcher beispielsweise als Lamellen ausgebildete Antriebselemente umfasst. Statt einer Ausgestaltung des Druckgasmotors als Lamellenmotor ist ferner eine Ausgestaltung als Turbinenmotor denkbar. Vorzugsweise sind mittels der Sensoreinrichtung Auslenkungszustandsdaten über einen Auslenkungszustand der Werkzeugeinheit relativ zu der Aufnahmeeinheit bereitstellbar.

Mittels der Sensoreinrichtung sind Auslenkungspositionsdaten über eine Auslenkungsposition und Auslenkungsrichtungsdaten über eine Auslenkungsrichtung der Werkzeugeinheit relativ zu der Aufnahmeeinheit bereitstellbar. Die Auslenkungsposition umfasst insbesondere einen Betrag und/oder ein Maß für die Auslenkung der Werkzeugeinheit relativ zu der Aufnahmeeinheit in Bezug auf die Ausgangsposition.

Bei einer erfindungsgemäßen Ausgestaltung der druckgasbetriebenen Vorrichtung ist vorgesehen, dass mittels der Sensoreinrichtung eine Drehzahl des Rotors relativ zu dem Stator ermittelbar ist.

Die druckgasbetriebene Vorrichtung umfasst eine Speichereinrichtung zur Speicherung eines von der Sensoreinrichtung ermittelten Auslenkungszustands und/oder einer von der Sensoreinrichtung ermittelten Drehzahl.

Bei einer vorteilhaften Ausgestaltung der druckgasbetriebenen Vorrichtung ist vorgesehen, dass die Vorrichtung einen oder mehrere in der Aufnahmeeinheit längs einer Führungsrichtung bewegbar geführte(n) und mit Druckgas beaufschlagbare(n) Kolben umfasst.

Der eine oder die mehreren Kolben sind dabei insbesondere an der Werkzeugeinheit festgelegt.

Vorzugsweise umfasst die druckgasbetriebene Vorrichtung drei oder mehr als drei, vorzugsweise wenigstens fünf, in der Aufnahmeeinheit der Vorrichtung längs der Führungsrichtung bewegbar geführte und mit Druckgas beaufschlagbare Kolben, welche bevorzugt senkrecht zur Führungsrichtung kreisförmig angeordnet sind. Vorzugsweise kann somit eine besonders gleichmäßige Verteilung der auftretenden Kräfte erreicht werden. Insbesondere kann ein Verkanten der Werkzeugeinheit verhindert werden.

Günstig kann es sein, wenn die Drehachse der Werkzeugeinheit in der Ausgangsposition der Werkzeugeinheit parallel zu der Führungsrichtung des einen oder der mehreren Kolben angeordnet ist.

Von Vorteil ist es, wenn mittels der Sensoreinrichtung eine Auslenkungsposition und/oder eine Auslenkungsrichtung der Werkzeugeinheit relativ zu der Aufnahmeeinheit ermittelbar ist.

Als vorteilhaft erweist es sich, wenn die Sensoreinrichtung ein oder mehrere Sensorelemente und ein oder mehrere Wirkelemente umfasst, wobei ein oder mehrere Wirkelemente oder ein oder mehrere Sensorelemente zur Ermittlung einer Auslenkungsposition und/oder Auslenkungsrichtung der Werkzeugeinheit vorzugsweise an einer dem Rotor abgewandten Seite der Werkzeugeinheit angeordnet sind. Vorzugsweise sind die Wirkelemente als Magnetelemente, insbesondere als Permanentmagnetelemente, ausgebildet.

Ein oder mehrere Sensorelemente sind dabei insbesondere außerhalb eines druckbeaufschlagten Bereichs der Vorrichtung angeordnet.

Günstigerweise umfasst die Sensoreinrichtung zur Ermittlung einer axialen Auslenkung der Werkzeugeinheit relativ zu der Aufnahmeeinheit ein oder mehrere Sensorelemente, zusätzlich zu den an der dem Rotor abgewandten Seite der Werkzeugeinheit angeordneten Sensorelementen. Alternativ oder ergänzend dazu ist die axiale Auslenkung der Werkzeugeinheit relativ zu der Aufnahmeeinheit mittels der Sensorelemente, welche an der dem Rotor abgewandten Seite der Werkzeugeinheit angeordnet sind, ermittelbar, so dass auf zusätzliche Sensorelemente verzichtet werden kann.

Bei einer vorteilhaften Ausgestaltung der druckgasbetriebenen Vorrichtung ist vorgesehen, dass ein oder mehrere Wirkelemente an der dem Rotor abgewandten Seite der Werkzeugeinheit angeordnet sind und dass ein oder mehrere Sensorelemente an der Aufnahmeeinheit angeordnet sind.

Alternativ dazu ist es denkbar, dass ein oder mehrere Sensorelemente an der dem Rotor abgewandten Seite der Werkzeugeinheit angeordnet sind und dass ein oder mehrere Wirkelemente an der Aufnahmeeinheit angeordnet sind.

Um eine einfache Montierbarkeit der druckgasbetriebenen Vorrichtung erreichen zu können, erweist es sich als vorteilhaft, wenn die Sensorelemente und/oder die Wirkelemente jeweils an einem gemeinsamen Trägerteil angeordnet sind.

Vorzugsweise sind die Wirkelemente auf einer dem Rotor abgewandten Seite der Werkzeugeinheit an einem Flanschabschnitt angeordnet, welcher das gemeinsame Trägerteil bildet. Der Flanschabschnitt ragt vorzugsweise radial, insbesondere senkrecht, von dem Stator weg und ist an diesem insbesondere festgelegt.

Bei einer vorteilhaften Ausgestaltung der druckgasbetriebenen Vorrichtung ist vorgesehen, dass Sensorelemente der Sensoreinrichtung an einer Platine oder Leiterplatte (PCB) angeordnet sind.

Die Platine oder Leiterplatte (PCB) bildet vorzugsweise ein Trägerteil für mindestens ein Sensorelement. Wenn mehrere Sensorelemente vorgesehen sind, bildet die Platine oder Leiterplatte (PCB) insbesondere ein gemeinsames Trägerteil für die Sensorelemente. Die Platine oder Leiterplatte (PCB) bildet insbesondere eine Trägerplatine. Vorzugsweise ist die Platine in der Aufnahmeeinheit, insbesondere an oder in einem Abdeckteil derselben, angeordnet.

Weiterhin ist es vorteilhaft, wenn die Sensoreinrichtung ein oder mehrere Sensorelemente zur Ermittlung einer Position eines oder mehrerer Kolben umfasst, insbesondere zur Ermittlung einer Auslenkungsposition und/oder einer Auslenkungsrichtung der Werkzeugeinheit relativ zu der Aufnahmeeinheit.

Die Ermittlung der Position des einen oder der mehreren Kolben umfasst insbesondere eine Ermittlung einer Position des einen oder der mehreren Kolben längs der Führungsrichtung. Vorzugsweise kann durch die Ermittlung der Position des einen oder der mehreren Kolben, welche insbesondere an der Werkzeugeinheit festgelegt sind, auf eine Auslenkungsposition und/oder Auslenkungsrichtung der Werkzeugeinheit geschlossen werden. Vorzugsweise umfasst die Sensoreinrichtung dabei ein oder mehrere Sensorelemente und ein oder mehrere Wirkelemente, wobei die Wirkelemente insbesondere an einer dem Rotor abgewandten Stirnseite der Kolben angeordnet sind. Ein oder mehrere Sensorelemente sind dabei insbesondere in einem druckbeaufschlagten Bereich der Vorrichtung, insbesondere an der Aufnahmeeinheit, angeordnet. Vorzugsweise sind ein oder mehrere jeweils Sensorelemente umfassende Sensoreinheiten dabei in die Aufnahmeeinheit einschraubbar.

Vorzugsweise umfasst der Rotor eine die Drehachse definierende Welle, welche über Lagerelemente am Stator drehbar gelagert ist, wobei mittels der Sensoreinrichtung eine Drehzahl der Welle relativ zu dem Stator und/oder relativ zu der Aufnahmeeinheit ermittelbar ist.

Vorzugsweise sind dabei mittels der Sensoreinrichtung Drehzahldaten bereitstellbar.

Günstig kann es sein, wenn mittels der Sensoreinrichtung eine Drehzahlüberwachung im Hinblick auf eine Prozesskontrolle ermöglicht werden kann. Beispielsweise kann beim Absinken einer Drehzahl des Rotors gegenüber dem Stator auf eine Abnutzung eines an der druckgasbetriebenen Vorrichtung angeordneten Bearbeitungswerkzeugs geschlossen werden, bspw. aufgrund ansteigender Andrückkräfte aufgrund des abgenutzten Bearbeitungswerkzeugs. Erforderlichenfalls können Gegenmaßnahmen eingeleitet werden, beispielsweise auch bei einem Drehzahlabfall infolge zu geringen Druck des Druckgases oder unzureichender Schmierung.

Der Benutzer kann vorzugsweise mit einer Hinweiseinrichtung über den Drehzahlabfall informiert werden.

Die Sensoreinrichtung umfasst insbesondere ein an der Welle angeordnetes Wirkelement. Das Wirkelement ist vorzugsweise ein Magnet, insbesondere ein Permanentmagnet. Vorzugsweise umfasst die Sensoreinrichtung ein Sensorelement zum Erfassen des Drehzustands der Welle. Das Sensorelement ist vorzugsweise in Bezug auf die Drehachse radial neben dem Wirkelement angeordnet. Alternativ oder ergänzend dazu ist das Sensorelement an dem vorstehend genannten gemeinsamen Trägerteil, insbesondere an der Platine oder Leiterplatte (PCB) angeordnet.

Als vorteilhaft erweist es sich ferner, wenn ein Auslenkungszustand der Werkzeugeinheit relativ zu der Aufnahmeeinheit mittels der Sensoreinrichtung diskret oder kontinuierlich ermittelbar ist.

Die Sensoreinrichtung umfasst vorzugsweise die Speichereinrichtung. Die Sensoreinrichtung ist insbesondere gemeinsam mit der Speichereinrichtung an der Platine oder Leiterplatte (PCB) angeordnet, insbesondere an dem Trägerteil für das mindestens eine Sensorelement.

Die Speichereinrichtung ist vorzugsweise zur Speicherung von Auslenkungszustandsdaten, insbesondere Auslenkungspositionsdaten und/oder Auslenkungsrichtungsdaten, und/oder zur Speicherung von Drehzahldaten ausgebildet. Die Auslenkungszustandsdaten und die Drehzahldaten sind insbesondere Sensordaten.

Vorzugsweise ist die Speichereinrichtung zur kontinuierlichen oder diskreten Speicherung der Auslenkungszustandsdaten und/oder Drehzahldaten ausgebildet. Ein Zeitintervall für die diskrete Ermittlung und/oder Speicherung ist vorzugsweise durch einen Benutzer vorgebbar.

Günstigerweise sind die Sensoreinrichtung und/oder die Speichereinrichtung als integrierte Schaltkreise ausgebildet. Die Daten sind insbesondere mittels einer Datenschnittstelle der druckgasbetriebenen Vorrichtung aus der Speichereinrichtung auslesbar.

Vorzugsweise ist in der Speichereinrichtung zu den jeweiligen Sensordaten ein Zeitstempel speicherbar. Vorzugsweise kann somit ein zeitlicher Verlauf der Sensordaten protokolliert werden. Alternativ oder ergänzend dazu ist in der Speichereinrichtung eine Betriebsdauer oder eine Laufzeit, insbesondere eine Gesamtlaufzeit, der druckgasbetriebenen Vorrichtung speicherbar.

Günstig kann es sein, wenn mittels der Speichereinrichtung von der Sensoreinrichtung ermittelte Auslenkungszustände und/oder Drehzahlen speicherbar sind, welche einen vorgegebenen Schwellenwert überschreiten und/oder unterschreiten. Somit kann vorzugsweise eine Drehzahl des Rotors relativ zu dem Stator abgespeichert werden, welche einen vorgegebenen Schwellenwert unterschreitet, beispielsweise aufgrund eines abgenutzten Werkzeuges, eines zu geringen Druckes des Druckgases oder aufgrund einer nicht ausreichenden Schmierung.

Die gespeicherten Daten, welche insbesondere Auslenkungszustandsdaten, Drehzahldaten und/oder Laufzeitdaten umfassen, sind für eine spätere Auswertung oder Fehlerbehebung aus der Speichereinrichtung vorzugsweise auslesbar. Günstigerweise können die gespeicherten Daten für Servicezwecke und/oder eine Qualitätskontrolle verwendet werden.

Der Schwellenwert ist vorzugsweise durch einen Benutzer vorgebbar.

Alternativ oder ergänzend dazu ist eine kontinuierliche Speicherung von Auslenkungszuständen und/oder Drehzahlen mittels der Speichereinrichtung denkbar. Die Speichereinrichtung umfasst dabei insbesondere einen digitalen Ringspeicher.

Bei einer Ausgestaltung der druckgasbetriebenen Vorrichtung ist vorgesehen, dass die Vorrichtung eine Datenschnittstelle umfasst zur Datenübertragung von Auslenkungszustandsdaten eines durch die Sensoreinrichtung ermittelten Auslenkungszustands der Werkzeugeinheit relativ zu der Aufnahmeeinheit an eine Hinweiseinrichtung.

Vorzugsweise umfasst die druckgasbetriebene Vorrichtung eine Hinweiseinrichtung, insbesondere eine optische Hinweiseinrichtung, beispielsweise in Form einer oder mehrerer Leuchtdioden (LED). Diese Hinweiseinrichtung ist vorzugsweise innerhalb der Aufnahmeeinheit und/oder in einem an der Aufnahmeeinheit angeordneten Abdeckteil angeordnet.

Die Datenschnittstelle ist dabei insbesondere zur Datenübertragung von Auslenkungspositionsdaten und/oder Auslenkungsrichtungsdaten ausgebildet. Vorzugsweise ist die Datenschnittstelle auch zur Datenübertragung von Drehzahldaten ausgebildet. Die Datenschnittstelle ist vorzugsweise zur kabelgebundenen und/oder kabellosen Übertragung von Daten ausgebildet und vorzugsweise an der Platine oder Leiterplatte (PCB), insbesondere an der Trägerplatine, angeordnet.

Die Hinweiseinrichtung ist vorzugsweise zur optischen und/oder akustischen Information eines Benutzers über einen Auslenkungszustand ausgebildet, insbesondere zur optischen und/oder akustischen Information eines Benutzers bei Überschreiten und/oder Unterschreiten eines vorgegebenen Schwellenwertes. Die Hinweiseinrichtung umfasst dabei insbesondere eine Anzeigeeinrichtung, beispielsweise einen Bildschirm eines Personal Computers (PC), eines Smartphones oder eines Tablet-Computers. Beispielsweise umfasst die Hinweiseinrichtung eine oder mehrere Leuchtdioden (LED).

Vorzugsweise ist die Werkzeugeinheit entgegen einer Kraft einer Rückstelleinrichtung aus der Ausgangsposition in die eine oder die mehreren Auslenkungspositionen auslenkbar.

Vorzugsweise umfasst die Rückstelleinrichtung einen oder mehrere mit Druckgas beaufschlagbare Kolben. Die Werkzeugeinheit ist insbesondere entgegen der Kraft eines oder mehrerer mit Druckgas beaufschlagter Kolben aus der Ausgangsposition in die eine oder die mehreren Auslenkungspositionen auslenkbar.

Alternativ oder ergänzend zu den mit Druckgas beaufschlagbaren Kolben umfasst die Rückstelleinrichtung insbesondere ein oder mehrere Federelemente, beispielsweise Schraubenfedern oder Tellerfedern.

Vorzugsweise ist die Werkzeugeinheit dabei durch Beaufschlagung des einen oder der mehreren Kolben mit Druckgas in die Ausgangsposition bewegbar.

Günstigerweise ist die Werkzeugeinheit in der Ausgangsposition parallel, insbesondere koaxial, zu einer Längsachse der Aufnahmeeinheit angeordnet.

Es ist denkbar, dass die Werkzeugeinheit in einer oder mehreren Auslenkungspositionen relativ zu einer Längsachse der Aufnahmeeinheit verkippt und/oder relativ zu der Aufnahmeeinheit axial in Richtung der Längsachse der Aufnahmeeinheit verschoben ist.

Günstigerweise ist die Werkzeugeinheit relativ zu der Längsachse der Aufnahmeeinheit um einen Winkel von mindestens ungefähr 2° verkippbar. Typischerweise ist die Werkzeugeinheit relativ zu der Längsachse der Aufnahmeeinheit um einen Winkel von 3° bis 5° verkippbar. Günstig kann es dabei ferner sein, wenn die Werkzeugeinheit axial relativ zu der Aufnahmeeinheit um mindestens 0,5 mm verschiebbar ist.

Von Vorteil ist es dabei, wenn die Werkzeugeinheit zum Verkippen der Werkzeugeinheit relativ zu der Längsachse der Aufnahmeeinheit in wenigstens einer Ebene, vorzugsweise in wenigstens zwei insbesondere senkrecht zueinander angeordneten Ebenen, bewegbar ist, insbesondere kegelmantelförmig.

Vorzugsweise ist eine Drehachse der Werkzeugeinheit dabei auf einem Kegelmantel bewegbar.

Günstigerweise ist die Sensoreinrichtung als induktive, kapazitive, optische und/oder magnetische Sensoreinrichtung ausgebildet.

Vorzugsweise umfasst die Sensoreinrichtung dabei ein oder mehrere Magnetfeld-Sensorelemente, vorzugsweise Hall-Sensorelemente, insbesondere 3D-Hall-Sensorelemente.

Vorzugsweise ist mittels eines 3D-Hall-Sensorelements eine Auslenkungsrichtung und/oder eine Auslenkungsposition der Werkzeugeinheit relativ zu der Aufnahmeeinheit ermittelbar. Insbesondere ist mittels eines 3D-Hall-Sensorelements zusätzlich eine Drehzahl des Rotors relativ zu dem Stator ermittelbar.

Die eingangs genannte Aufgabe wird ferner durch ein erfindungsgemäßes Druckgasbearbeitungssystem gelöst, umfassend eine druckgasbetriebene Vorrichtung der vorstehenden Art und eine bewegbar ausgebildete und/oder ansteuerbare Halteeinrichtung, an welcher die Vorrichtung vorzugsweise über die Aufnahmeeinheit gehalten ist. Die Halteeinrichtung ist beispielsweise maschinell bewegbar, etwa in Gestalt eines Roboterarms.

Eine vorteilhafte Ausführungsform des Druckgasbearbeitungssystems kann eine Steuereinrichtung umfassen, mittels welcher die Halteeinrichtung automatisiert ansteuerbar ist und/oder mittels welcher die Halteeinrichtung durch einen Benutzer ansteuerbar ist. Günstigerweise ist die druckgasbetriebene Vorrichtung mittels der Halteeinrichtung somit automatisiert an einem Werkstück positionierbar, beispielsweise abhängig von einem Datensatz, welcher eine Geometrie und/oder Position des Werkstücks beschreibt. Das Druckgasbearbeitungssystem umfasst insbesondere eine Bedieneinheit, mittels welcher die Halteeinrichtung beim Einlernen oder "Teachen" durch einen Benutzer oder "Integrator" ansteuerbar ist.

Günstigerweise ist die Halteeinrichtung abhängig von dem von der Sensoreinrichtung der druckgasbetriebenen Vorrichtung ermittelten Auslenkungszustand ansteuerbar, insbesondere zum Steuern und/oder Regeln einer Position der druckgasbetriebenen Vorrichtung bei der Bearbeitung eines Werkstücks. Vorzugsweise ist die Steuereinrichtung des Druckgasbearbeitungssystems zur Kommunikation mit einer Datenschnittstelle der druckgasbetriebenen Vorrichtung ausgebildet. Insbesondere sind Auslenkungszustandsdaten und/oder Drehzahldaten von der druckgasbetriebenen Vorrichtung an die Steuerungseinrichtung des Druckgasbearbeitungssystems übertragbar.

Eine vorteilhafte Ausführungsform des Druckgasbearbeitungssystems kann eine optische und/oder akustische Hinweiseinrichtung umfassen, mittels welcher ein Überschreiten und/oder Unterschreiten eines vorgegebenen Schwellenwertes für den Auslenkungszustand und/oder für eine Drehzahl des Rotors relativ zu dem Stator an einen Benutzer ausgebbar sind.

Die Hinweiseinrichtung umfasst vorzugsweise eine Anzeigeeinrichtung. Die Anzeigeeinrichtung umfasst beispielsweise einen Bildschirm eines Personal Computers (PC), eines Smartphones oder eines Tablet-Computers. Alternativ oder ergänzend dazu umfasst die Hinweiseinrichtung eine oder mehrere Leuchtdioden (LED).

Vorzugsweise sind mittels einer oder mehrerer Leuchtdioden (LED) verschiedene Auslenkungszustände durch verschiedene Farben anzeigbar, beispielsweise grün (innerhalb eines Sollbereichs), gelb (am Rand des Sollbereichs) und rot (außerhalb des Sollbereichs).

Vorzugsweise ist mittels der durch die Sensoreinrichtung der druckgasbetriebenen Vorrichtung ermittelten Auslenkungszustände ein Steuern und/oder Regeln einer Druckgasbeaufschlagung der Kolben möglich, so dass eine Rückstellkraft der Kolben abhängig von einem ermittelten Auslenkungszustand der Werkzeugeinheit relativ zu der Aufnahmeeinheit steuerbar und/oder regelbar ist.

Als vorteilhaft erweist es sich ferner, wenn das Druckgasbearbeitungssystem eine mit der Sensoreinrichtung der Vorrichtung gekoppelte Druckgasbereitstellungseinrichtung umfasst, mittels welcher abhängig von einem mittels der Sensoreinrichtung ermittelten Drehzustand die Menge und/oder der Druck an Druckgas einstellbar ist. Vorzugsweise ist eine Steuerung und/oder Regelung der Menge (des Volumenstroms) und/oder des Druckes an Druckgas möglich. Abhängig vom jeweils erfassten Drehzustand und vorzugsweise der Drehzahl kann dadurch der Betriebspunkt der druckgasbetriebenen Vorrichtung ideal eingestellt werden.

Die nachfolgende Beschreibung bevorzugter Ausführungsformen dient im Zusammenhang mit der Zeichnung der näheren Erläuterung der Erfindung. Es zeigen:
- Figur 1:: eine Längsschnittansicht einer bevorzugten Ausführungsform einer erfindungsgemäßen druckgasbetriebenen Vorrichtung in einer Ausgangsposition;
- Figur 2:: eine Längsschnittansicht der Vorrichtung aus Figur 1 in einer Auslenkungsposition;
- Figur 3:: eine vergrößerte Darstellung von Detail III in Figur 2;
- Figur 4:: eine Längsschnittansicht einer weiteren bevorzugten Ausführungsform einer erfindungsgemäßen druckgasbetriebenen Vorrichtung in einer Ausgangsposition;
- Figur 5:: eine Längsschnittansicht einer weiteren bevorzugten Ausführungsform einer erfindungsgemäßen druckgasbetriebenen Vorrichtung in einer Ausgangsposition; und
- Figur 6:: eine bevorzugte Ausführungsform eines erfindungsgemäßen Druckgasbearbeitungssystems, umfassend eine erfindungsgemäße druckgasbetriebene Vorrichtung.

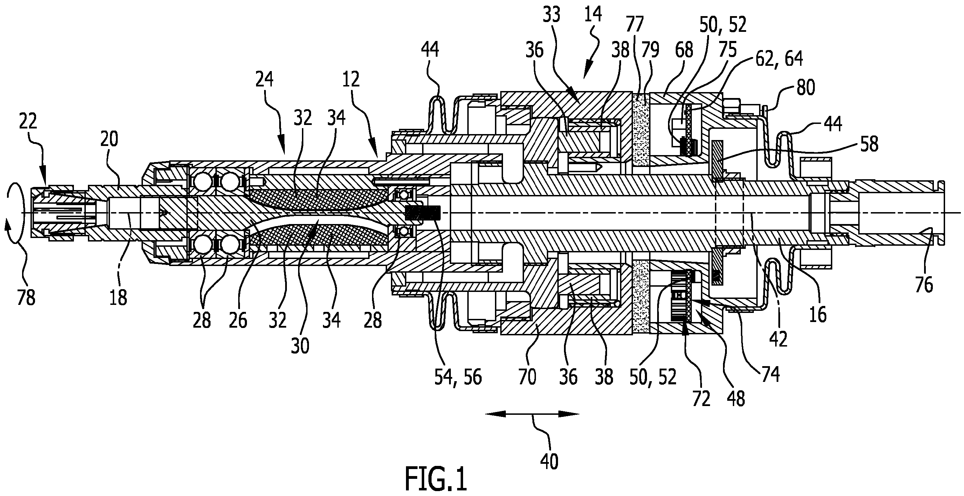

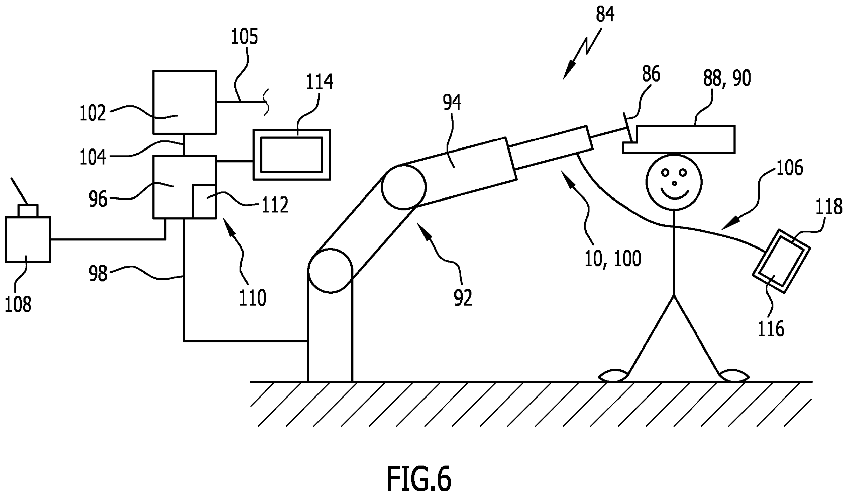

Die Figuren 1 bis 3 zeigen in einer Längsschnittansicht eine mit dem Bezugszeichen 10 bezeichnete bevorzugte Ausführungsform einer erfindungsgemäßen druckgasbetriebenen Vorrichtung. Die Vorrichtung 10 kann zum Bearbeiten eines Gegenstandes bei der industriellen Fertigung eingesetzt werden. Zu diesem Zweck kann an der Vorrichtung 10 ein in den Figuren 1 bis 3 nicht dargestelltes Bearbeitungswerkzeug festlegbar oder festgelegt sein, das von der Vorrichtung 10 drehend antreibbar ist und zur Bearbeitung des Gegenstands dient. Auf einen derartigen Einsatz der Vorrichtung 10 wird nachfolgend mit Verweis auf Figur 6 und eine vorteilhafte Ausführungsform eines erfindungsgemäßen Druckgasbearbeitungssystems eingegangen.

Die druckgasbetriebene Vorrichtung 10 umfasst eine Werkzeugeinheit 12 und eine Aufnahmeeinheit 14 zur Aufnahme der Werkzeugeinheit 12.

Die Werkzeugeinheit 12 umfasst einen Stator 16 und einen relativ zu dem Stator 16 unter Beaufschlagung mit Druckgas um eine Drehachse 18 drehbar antreibbaren Rotor 20. Der Rotor 20 der Werkzeugeinheit 12 umfasst insbesondere einen Anschlussabschnitt 22, an welchem ein Bearbeitungswerkzeug beispielsweise durch Kraft- und/oder Formschluss festlegbar ist, beispielsweise durch Verschraubung, Verklemmung oder Verrastung.

Der Rotor 20 und der Stator 16 bilden gemeinsam einen Druckgasmotor 24. Der Rotor 20 umfasst eine die Drehachse 18 definierende Welle 26, welche in an sich bekannter Weise über Lagerelemente 28 an dem Stator 16 drehbar gelagert ist.

Der Stator 16 begrenzt zwischen den axial voneinander beabstandeten Lagerelementen 28 einen Antriebsraum 30. Der Rotor 20 umfasst im Antriebsraum 30 positionierte und mit der Welle 26 gekoppelte Antriebselemente 32, welche vorliegend als Lamellen 34 ausgestaltet sind. In an sich bekannter Weise können die Lamellen 34 durch Druckgas im Antriebsraum 30 beaufschlagt werden, so dass eine in Umlaufrichtung der Drehachse 18 wirkende Kraft auf die Antriebselemente 32 wirkt, welche zur Rotation des Rotors 20 auf die Welle 26 übertagen wird.

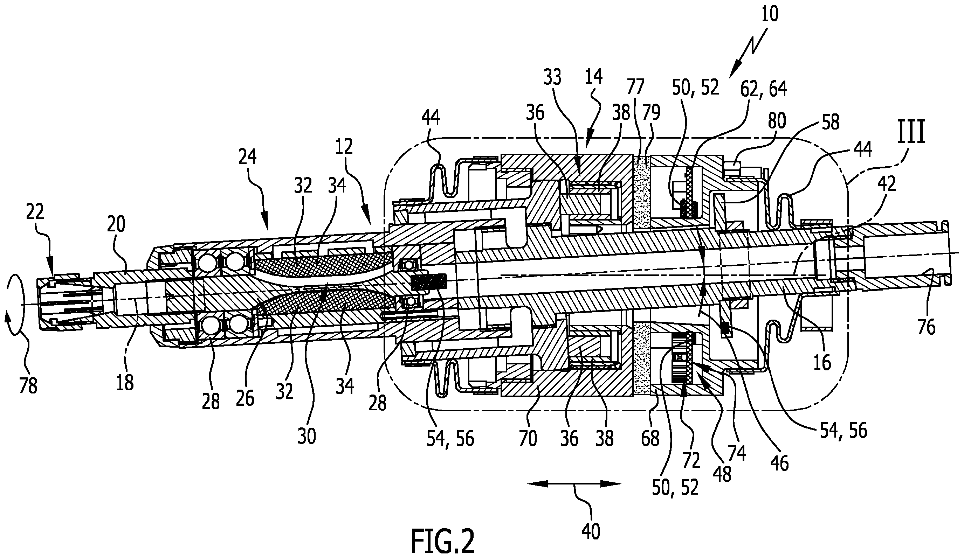

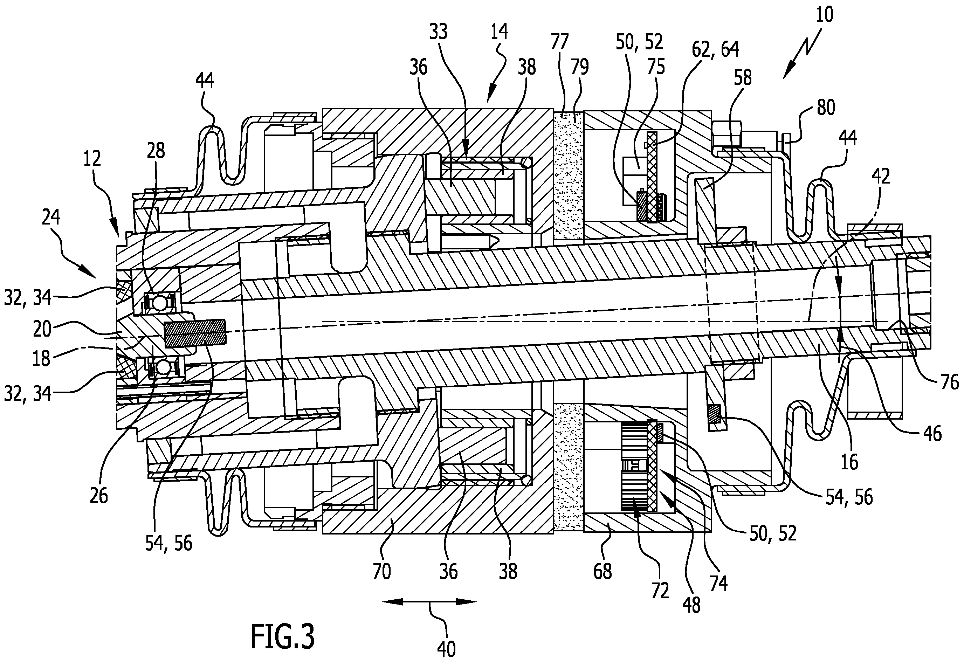

Die Werkzeugeinheit 12 ist relativ zu der Aufnahmeeinheit 14 aus einer mittels der Aufnahmeeinheit 14 in Figur 1 dargestellten Ausgangsposition in eine oder mehrere Auslenkungspositionen auslenkbar (vgl. Figuren 2 und 3).

Die druckgasbetriebene Vorrichtung 10 umfasst vorzugsweise eine Rückstelleinrichtung 33, mittels derer die Werkzeugeinheit 12 aus der einen oder den mehreren Auslenkungspositionen zurück in die Ausgangsposition bewegbar ist.

Die Werkzeugeinheit 12 ist insbesondere entgegen einer Kraft der Rückstelleinrichtung 33 aus der Ausgangsposition in die eine oder die mehreren Auslenkungspositionen auslenkbar ist.

Hierzu umfasst die druckgasbetriebene Vorrichtung 10, insbesondere die Rückstelleinrichtung 33, mehrere in der Aufnahmeeinheit 14 bewegbar geführte und mit Druckgas beaufschlagbare Kolben 36. Die Kolben 36 sind insbesondere jeweils in einer in der Aufnahmeeinheit 14 festgelegten Führungshülse 38 bewegbar geführt. Die Kolben 36 sind beispielsweise einen Ends an der Werkzeugeinheit 12, insbesondere an dem Stator 16, festgelegt. Die Vorrichtung 10 umfasst vorzugsweise drei oder mehr als drei, vorzugsweise mindestens fünf in der Aufnahmeeinheit 14 längs einer Führungsrichtung (vgl. Doppelpfeil 40) bewegbar geführte und mit Druckgas beaufschlagbare Kolben 36. Die Kolben 36 sind bevorzugt senkrecht zur Führungsrichtung 40 kreisförmig angeordnet, wobei vorzugsweise eine besonders gleichmäßige Verteilung der auftretenden Kräfte sowie ein Verklemmen der Kolben 36 verhindert werden kann.

In der in Figur 1 dargestellten Ausgangsposition der Werkzeugeinheit 12 ist die Drehachse 18 der Werkzeugeinheit 12 parallel zur Führungsrichtung 40 der Kolben 36 angeordnet. In der Ausgangsposition der Werkzeugeinheit 12 ist die Drehachse 18 insbesondere koaxial zu einer Längsachse 42 der Aufnahmeeinheit 14 angeordnet. Die Werkzeugeinheit 12 ist zu der Längsachse 42 der Aufnahmeeinheit 14 verkippbar und/oder relativ zu der Aufnahmeeinheit 14 axial in Richtung der Längsachse 42 der Aufnahmeeinheit 14 verschiebbar. Vorzugsweise umfasst die druckgasbetriebene Vorrichtung 10 zur Abdichtung zwischen der Werkzeugeinheit 12 und der Aufnahmeeinheit 14 daher zwei aus einem flexiblen Material hergestellte Faltenbälge 44. Die Werkzeugeinheit 12 ist relativ zu der Längsachse 42 der Aufnahmeeinheit 14 vorzugsweise um einen Winkel 46 von mindestens 2° verkippbar (vgl. Figuren 2 und 3). Typischerweise ist die Werkzeugeinheit 12 relativ zu der Längsachse 42 der Aufnahmeeinheit 14 um einen Winkel von 3° bis 5° verkippbar. Ferner ist die Werkzeugeinheit 12 axial in Richtung der Längsachse 42 der Aufnahmeeinheit 14 um mindestens 0,5 mm verschiebbar.

Die Werkzeugeinheit 12 ist entgegen einer Kraft der mit Druckgas beaufschlagten Kolben 36 aus der in Figur 1 gezeigten Ausgangsposition in eine oder mehrere Auslenkungspositionen auslenkbar (vgl. Figuren 2 und 3). Durch Beaufschlagung der Kolben 36 mit Druckgas ist die Werkzeugeinheit 12 wiederum in die in Figur 1 gezeigte Ausgangsposition bewegbar.

Bei der in den Figuren 1 bis 3 gezeigten Ausführungsform der druckgasbetriebenen Vorrichtung 100 sind die Kolben 36 parallel zur Längsachse 42 der Aufnahmeeinheit 14, insbesondere axial, geführt.

Zur Ermittlung eines Auslenkungszustands der Werkzeugeinheit 12 relativ zu der Aufnahmeeinheit 14, d.h. zur Ermittlung einer Auslenkungsposition und/oder einer Auslenkungsrichtung der Werkzeugeinheit 12 relativ zu der Aufnahmeeinheit 14, und/oder zur Ermittlung einer Drehzahl des Rotors 20 relativ zu dem Stator 16 bzw. relativ zu der Aufnahmeeinheit 14, umfasst die druckgasbetriebene Vorrichtung 10 eine Sensoreinrichtung 48. Die Sensoreinrichtung 48 ist beispielsweise als magnetische, induktive, kapazitive und/oder optische Sensoreinrichtung ausgebildet.

Die Sensoreinrichtung 48 der in den Figuren 1 bis 3 dargestellten Ausführungsform der druckgasbetriebenen Vorrichtung 10 umfasst insbesondere ein oder mehrere Sensorelemente 50, welche insbesondere als 3D-Hall-Sensorelemente 52 ausgebildet sind.

Es ist auch denkbar, dass die Kolben 36 der Rückstelleinrichtung 33 senkrecht zur Längsachse 42 (in radialer Richtung) der Aufnahmeeinheit 14 geführt sind. Derart geführte Kolben 36 können beispielsweise als Einheit an einer vorderen Seite der Werkzeugeinheit 12, insbesondere am Rotor 20 und beispielsweise an einer benachbart zum Anschlussabschnitt 22 angeordnet werden. Die Vorrichtung kann auf diese Weise mit verhältnismäßig geringer axialer Erstreckung gebaut werden.

Wünschenswert ist es jedoch, die Kolben 36 in einem vergleichsweise großen Abstand zu dem Anschlussabschnitt 22 des Rotors 20 anzuordnen und die Sensoreinrichtung 48 zur Ermittlung des Auslenkungszustands der Werkzeugeinheit 12 relativ zu der Aufnahmeeinheit 14 möglichst ebenfalls an einer dem Anschlussabschnitt 22 abgewandten Seite anzuordnen. Dabei kann durch auftretende Hebeleffekte vorzugsweise die Genauigkeit bei der Ermittlung des Auslenkungszustands mittels der Sensoreinrichtung 48 erhöht werden.

Es hat sich daher als günstig erwiesen, den Stator 16 vergleichsweise lang auszuführen.

Bei einer Umsetzung der druckgasbetriebenen Vorrichtung 10 in der Praxis kann mittels der Sensoreinrichtung 48 eine Auslenkung der Werkzeugeinheit 12 im Bereich vom ungefähr 0,1 mm bis ungefähr 0,2 mm am Anschlussabschnitt 22 ermittelt werden. Dies ergibt sich durch eine hohe detektierbare Auflösung des Kippwinkels im Bereich der Sensoreinrichtung 48 bei der druckgasbetriebenen Vorrichtung 10 von ungefähr 0,04°.

Mittels der Sensoreinrichtung 48 ist ferner vorzugsweise eine Drehzahl des Rotors 20 relativ zu dem Stator 16 ermittelbar, insbesondere eine Drehzahl der Welle 26 relativ zu dem Stator 16 und/oder zu der Aufnahmeeinheit 14. Die Sensoreinrichtung 48 umfasst hierzu insbesondere ein an der Welle 26 angeordnetes Wirkelement 54, welches insbesondere als Permanentmagnet 56 ausgebildet ist. Das Wirkelement 54 ist an einem dem Anschlussabschnitt 22 abgewandten Ende der Welle 26 angeordnet. Der an der Welle 26 angeordnete Permanentmagnet 56 ist insbesondere diametral magnetisiert, so dass eine Drehzahl des Rotors 20 relativ zu dem Stator 16 mittels der Sensoreinrichtung 48 ermittelbar ist.

Die Sensoreinrichtung 48 umfasst ferner als Permanentmagnete 56 ausgebildete Wirkelemente 54, welche an einem Flanschabschnitt 58 angeordnet sind, welcher am Stator 16 festgelegt ist und von diesem vorzugsweise radial, insbesondere senkrecht, in Bezug auf die Drehachse 18 weg ragt. Der Flanschabschnitt 58 bildet ein gemeinsames Trägerteil 60 für die Wirkelemente 54. Die an dem Stator 16 festgelegten Permanentmagnete 56 sind vorzugsweise axial magnetisiert.

Die Sensorelemente 50 der Sensoreinrichtung 48 sind an einer Platine 62 oder an einer Leiterplatte (PCB) angeordnet, welche als Trägerplatine 64 für die Sensorelemente 50 ausgebildet ist und somit ein gemeinsames Trägerteil für die Sensorelemente 50 bildet. Die Platine 62 ist insbesondere auf einer dem Aufnahmeabschnitt 22 abgewandten Seite der druckgasbetriebenen Vorrichtung 10 angeordnet.

Bei der in den Figuren 1 bis 3 dargestellten Ausführungsform der druckgasbetriebenen Vorrichtung 10 sind die Sensorelemente 50 außerhalb eines druckbeaufschlagten Bereichs der Vorrichtung 10 angeordnet.

Die Platine 62 bzw. das gemeinsame Trägerteil ist insbesondere in einem Abdeckteil 68 der Aufnahmeeinheit 14 festgelegt. Der Abdeckteil 68 ist beispielsweise mit einem Grundteil 70 der Aufnahmeeinheit 14 verbindbar, beispielsweise durch Aufschrauben des Abdeckteils 68 auf den Grundteil 70. Das Abdeckteil 68 ist vorzugsweise aus einem nicht magnetischen Material hergestellt, beispielsweise aus einem Kunststoffmaterial.

Bei einer vorteilhaften Ausführungsform der Erfindung sind beispielsweise vier Sensorelemente 50 vorhanden und vier Wirkelemente 54 am Trägerteil 60 angeordnet. Diese sind bevorzugt, auch bei einer von vier Stück unterschiedlichen Anzahl, jeweils in gleichen Winkelabständen voneinander um die Drehachse 18 verteilt.

Mittels der Sensoreinrichtung 48 ist durch die an der Platine 62 angeordneten Sensorelemente 50 und die an dem Flanschabschnitt 58 angeordneten Wirkelemente 54 eine Auslenkungsposition und/oder eine Auslenkungsrichtung der Werkzeugeinheit 12 relativ zu der Aufnahmeeinheit 14 ermittelbar. Insbesondere sind mittels der Sensoreinrichtung 48 Auslenkungspositionsdaten über eine Auslenkungsposition und/oder Auslenkungsrichtungsdaten über eine Auslenkungsrichtung der Werkzeugeinheit 12 relativ zu der Aufnahmeeinheit 14 bereitstellbar.

Ein Auslenkungszustand der Werkzeugeinheit 12 relativ zu der Aufnahmeeinheit 14 ist mittels der Sensoreinrichtung 48 diskret oder kontinuierlich ermittelbar.

Mittels der Sensoreinrichtung 48, insbesondere mittels des an der Welle 26 angeordneten Wirkelements 54 und der an der Platine 62 angeordneten Sensorelemente 50 ist ferner eine Drehzahl des Rotors 20 relativ zu dem Stator 16 ermittelbar. Insbesondere sind Drehzahldaten über eine Drehzahl mittels der Sensoreinrichtung 48 bereitstellbar.

Die Vorrichtung 10 umfasst vorzugsweise eine Speichereinrichtung 72 zur Speicherung eines von der Sensoreinrichtung 48 ermittelten Auslenkungszustands und/oder einer von der Sensoreinrichtung 48 ermittelten Drehzahl. Vorzugsweise umfasst die Sensoreinrichtung 48 die Speichereinrichtung 72. Die Speichereinrichtung 72 ist insbesondere gemeinsam mit der Sensoreinrichtung 48 an der Platine 62 bzw. der Leiterplatte (PCB) angeordnet. Die Sensoreinrichtung 48 ist insbesondere als integrierter Schaltkreis ausgebildet.

Die Speichereinrichtung 72 ist zur Speicherung von Auslenkungszustandsdaten, insbesondere von Auslenkungspositionsdaten und/oder Auslenkungsrichtungsdaten, und/oder zur Speicherung von Drehzahldaten ausgebildet.

Vorzugsweise ist die Speichereinrichtung 72 zur diskreten oder kontinuierlichen Speicherung der Auslenkungszustandsdaten und/oder der Drehzahldaten ausgebildet. Ein Zeitintervall für die diskrete Ermittlung und/oder Speicherung ist vorzugsweise durch einen Benutzer vorgebbar.

In der Speichereinrichtung 72 sind insbesondere von der Sensoreinrichtung 48 ermittelte Auslenkungszustände und/oder Drehzahlen speicherbar, welche einen vorgegebenen Schwellenwert überschreiten und/oder unterschreiten. Der Schwellenwert ist vorzugsweise ebenfalls durch einen Benutzer vorgebbar. Die Speichereinrichtung 72 umfasst hierzu insbesondere einen digitalen Ringspeicher. Vorzugsweise sind somit Fehlbedienungen der druckgasbetriebenen Vorrichtung 10 protokollierbar, wobei ein Einsatz der druckgasbetriebenen Vorrichtung 10 für Gewährleistungszwecke überwacht werden kann.

Vorzugsweise ist hierzu in der Speichereinrichtung 72 zu den jeweiligen Sensordaten ein Zeitstempel speicherbar, so dass ein zeitlicher Verlauf der Sensordaten protokolliert werden kann. Alternativ oder ergänzend dazu ist in der Speichereinrichtung 72 eine Laufzeit, insbesondere eine Gesamtlaufzeit, der druckgasbetriebenen Vorrichtung speicherbar, so dass die Laufzeit überwacht werden kann, insbesondere für einen Servicefall.

Zur Datenübertragung von Auslenkungszustandsdaten und/oder von Drehzahldaten umfasst die Vorrichtung 10 eine Datenschnittstelle 74. Mittels der Datenschnittstelle 74 sind Auslenkungszustandsdaten über einen durch die Sensoreinrichtung 48 ermittelten Auslenkungszustand der Werkzeugeinheit 12 relativ zu der Aufnahmeeinheit 14 übertragbar, beispielsweise an eine Hinweiseinrichtung 75.

Die Hinweiseinrichtung 75 kann vorzugsweise in der Aufnahmeeinheit 14 angeordnet sein, zum Beispiel in dem Abdeckteil 68. Die Hinweiseinrichtung kann eine oder mehrere Leuchtdioden (LED) umfassen. Die Hinweiseinrichtung 75 ist vorzugsweise auf der Platine 62 und/oder Leiterplatte (PCB) angeordnet.

Um optische Signale von der Hinweiseinrichtung 75 für den Benutzer unmittelbar sichtbar zu machen, umfasst die druckgasbetriebene Vorrichtung 10 vorzugsweise ein transluzentes Gehäuseelement 77, beispielsweise in Form eines insbesondere plattenförmigen Plexiglaselements 79. Das transluzente Gehäuseelement 77 ist vorzugsweise zwischen der Aufnahmeeinheit 14 und dem Abdeckteil 68 angeordnet und kann sich entlang des gesamten Außenumfangs der Aufnahmeeinheit 14 erstrecken.

Mittels der mindestens einen Leuchtdiode (LED) können verschiedene Auslenkungszustände der Werkzeugeinheit 12 für den Benutzer unmittelbar erkennbar an der Vorrichtung 10 selbst angezeigt werden. Vorzugsweise werden hierzu Farben verwendet, beispielsweise grün (innerhalb eines Sollbereichs), gelb (am Rand des Sollbereichs) und rot (außerhalb des Sollbereichs).

Alternativ oder ergänzend können von der Hinweiseinrichtung 75 akustische Hinweise an den Benutzer ausgegeben werden, wobei zum Beispiel beim Überschreiten eines Sollwertes für die Auslenkung ein Hinweiston ertönt.

Ferner sind beispielsweise Drehzahldaten über eine von der Sensoreinrichtung 48 ermittelte Drehzahl durch die Datenschnittstelle 74 an die Hinweiseinrichtung übertragbar. Die Datenschnittstelle 74 ist zur kabelgebundenen und/oder kabellosen Übertragung von Daten ausgebildet und insbesondere an der Platine 62 bzw. der Leiterplatte (PCB) angeordnet.

Der Stator 16 der Werkzeugeinheit 12 bildet vorliegend einen Lufteinlass für den Druckgasmotor 24. Dem Lufteinlass ist über eine Einlassöffnung 76 Druckgas, insbesondere Druckluft, von einer in den Figuren 1 bis 3 nicht gezeigten Druckgasbereitstellungseinrichtung zuführbar. Mittels des über die Einlassöffnung 76 dem Stator 16 zugeführten Druckgases kann der Rotor 20 über die an der Welle 26 angeordneten Antriebselemente 32 insbesondere in Rotation in Richtung des Pfeils 78 versetzt werden.

Zur Druckbeaufschlagung der in der Aufnahmeeinheit 14 geführten Kolben 36 umfasst die Vorrichtung 10 ferner einen Druckgasanschluss 80, mittels welchem die Kolben 36 mit Druckgas, insbesondere Druckluft, von der in den Figuren 1 bis 3 nicht dargestellten Druckgasbereitstellungseinrichtung beaufschlagbar sind.

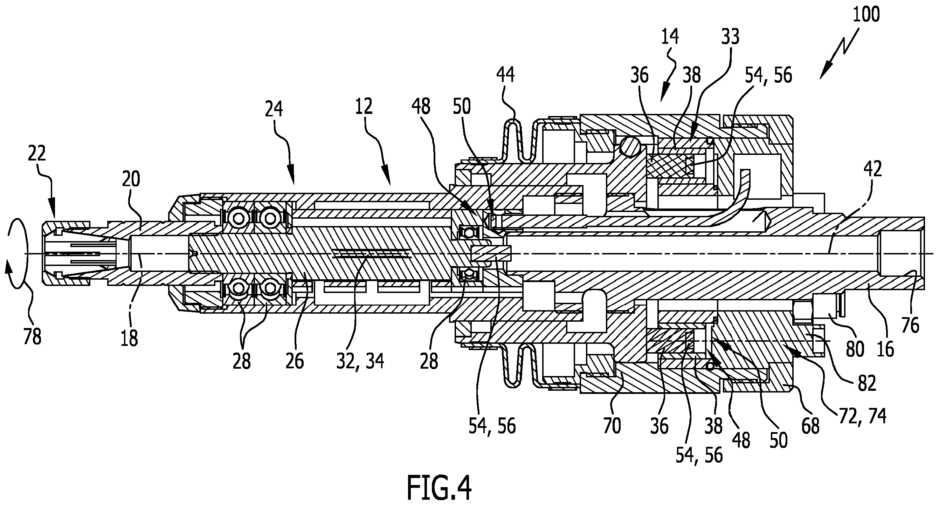

Figur 4 zeigt eine Längsschnittansicht einer mit dem Bezugszeichen 100 bezeichneten weiteren vorteilhaften Ausführungsform einer erfindungsgemäßen druckgasbetriebenen Vorrichtung. Für gleiche oder gleichwirkende Merkmale und Bauteile der Vorrichtungen 10 und 100 werden identische Bezugszeichen benutzt. Die mit der Vorrichtung 10 erzielbaren Vorteile können bei der Vorrichtung 100 ebenfalls erzielt werden, so dass diesbezüglich auf die voranstehenden Erläuterungen verwiesen werden kann.

Der Unterschied zwischen den Vorrichtungen 10 und 100 besteht im Wesentlichen darin, dass die Sensoreinrichtung 48 der Vorrichtung 100 ein oder mehrere Sensorelemente 50 zur Ermittlung einer Position der Kolben 36 längs der Führungsrichtung 40 umfasst. Durch Ermittlung der Position der Kolben 36, welche an der Werkzeugeinheit 12 festgelegt sind, kann vorzugsweise auf eine Auslenkungsposition und/oder Auslenkungsrichtung der Werkzeugeinheit 12 gegenüber der Aufnahmeeinheit 14 geschlossen werden.

Die Sensoreinrichtung 48 umfasst hierzu als Permanentmagnete 56 ausgebildete Wirkelemente 54. Die Wirkelemente 54 sind insbesondere an einer der Werkzeugeinheit 12 abgewandten Stirnseite der Kolben 36 angeordnet.

Die druckgasbetriebene Vorrichtung 100 umfasst eine an der Aufnahmeeinheit 14 anordenbare, insbesondere in dieselbe einschraubbare, Sensoreinheit 82. Die Sensoreinheit 82 umfasst vorzugsweise ein oder mehrere Sensorelemente 50, mittels welcher eine Auslenkung der Kolben 36 ermittelbar ist. Die Sensoreinheit 82 umfasst vorzugsweise ferner eine Speichereinrichtung 72 sowie eine Datenschnittstelle 74.

Zur Ermittlung einer Drehzahl des Rotors 20 relativ zu dem Stator 16 umfasst die Sensoreinrichtung 48 der Vorrichtung 100 ein weiteres Sensorelement 50. Das Sensorelement 50 ist in Bezug auf die Drehachse 18 insbesondere radial neben dem als Permanentmagnet 56 ausgebildeten Wirkelement 54 angeordnet, welches an dem Ende der Welle 26 angeordnet ist, welches dem Anschlussabschnitt 22 abgewandt ist.

Die Sensorelemente 50 der Sensoreinrichtung 48 sind bei der druckgasbetriebenen Vorrichtung 100 insbesondere in einem druckbeaufschlagten Bereich der Vorrichtung 100 angeordnet.

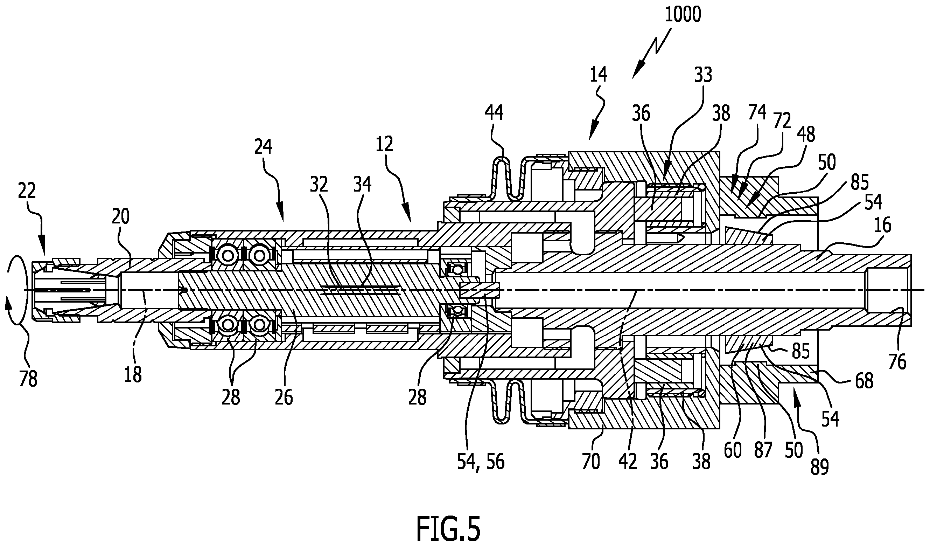

Figur 5 zeigt eine Längsschnittansicht einer mit dem Bezugszeichen 1000 bezeichneten weiteren vorteilhaften Ausführungsform einer erfindungsgemäßen druckgasbetriebenen Vorrichtung. Für gleiche oder gleichwirkende Merkmale und Bauteile der Vorrichtungen 10, 100 und 1000 werden identische Bezugszeichen benutzt. Die mit den Vorrichtungen 10, 100 erzielbaren Vorteile können bei der Vorrichtung 1000 ebenfalls erzielt werden, so dass diesbezüglich auf die voranstehenden Erläuterungen verwiesen werden kann.

Der Unterschied zwischen den Vorrichtungen 10 und 1000 besteht im Wesentlichen darin, dass die Sensoreinrichtung 48 der Vorrichtung 1000 zur Ermittlung eines Auslenkungszustands der Werkzeugeinheit 12 relativ zu der Aufnahmeeinheit 14 Wirkelemente 54 umfasst, welche am Stator 16 an einer dem Rotor 20 abgewandten Seite festgelegt sind und zum Beispiel als schräg zur Drehachse 18 angeordnete Flächen 85 ausgebildet sind.

Hierzu umfasst die Sensoreinrichtung 48 insbesondere einen Ring 87, welcher an dem Stator 16 auf einer dem Aufnahmeabschnitt 22 abgewandten Seite angeordnet ist. Die Flächen 85 sind an einem Umfang des Rings 87 angeordnet. Vorzugsweise umfasst der Ring 87 vier gleichmäßig über den Umfang verteilt angeordnete Flächen 85.

Die Sensoreinrichtung 48 der Vorrichtung 1000 umfasst ein oder mehrere Sensorelemente 50, welche als induktive Sensorelemente ausgebildet sind. Die Sensorelemente 50 sind insbesondere in das Abdeckteil 68 der Aufnahmeeinheit 14 eingebracht. Vorzugsweise umfasst oder bildet das Abdeckteil 68 dabei eine Sensoreinheit 89. Günstigerweise ist mit jeweils einem Sensorelement 50 jeweils ein Abstand zu jeweils einer Fläche 85 ermittelbar, so dass über den ermittelten Abstand auf einen Auslenkungszustand der Werkzeugeinheit 12 relativ zu der Aufnahmeeinheit geschlossen werden kann. Die Sensoreinrichtung 48 umfasst insbesondere dieselbe Anzahl an Flächen 85.

Eine Drehzahl des Rotors 20 gegenüber dem Stator 16 kann bei der Vorrichtung 1000 mit der Sensoreinrichtung 48 entsprechend der Vorrichtung 100 ermittelt werden. Die Sensoreinrichtung umfasst hierzu insbesondere ein an der Welle 26 angeordnetes Wirkelement 54, welches insbesondere als Permanentmagnet 56 ausgebildet ist. Das Wirkelement 54 ist an einem dem Anschlussabschnitt 22 abgewandten Ende der Welle 26 angeordnet.

Bei der in Figur 5 dargestellten Ausführungsform der druckgasbetriebenen Vorrichtung 1000 sind die Sensorelemente 50 ebenfalls außerhalb eines druckbeaufschlagten Bereichs der Vorrichtung 10 angeordnet.

Ein Beispiel einer Anwendung der druckgasbetriebenen Vorrichtungen 10, 100 oder 1000 wird nachfolgend unter Verweis auf Figur 6 gezeigt, in der eine mit dem Bezugszeichen 84 bezeichnete vorteilhafte Ausführungsform eines erfindungsgemäßen Druckgasbearbeitungssystems schematisch dargestellt ist.

Das Druckgasbearbeitungssystem 84 umfasst die druckgasbetriebene Vorrichtung 10, 100 oder 1000, an deren Anschlussabschnitt 22 ein Bearbeitungswerkzeug 86 mit der Welle 26 verbunden ist. Die druckgasbetriebene Vorrichtung 10, 100 oder 1000 dient zum Bearbeiten eines Gegenstandes 88, insbesondere eines Werkstücks 90.

Das Druckgasbearbeitungssystem 84 umfasst ferner eine Halteeinrichtung 92, welche maschinell angetrieben und bewegbar ist. Die Halteeinrichtung 92 ist im vorliegenden Fall als Roboterarm 94 ausgebildet. Das Druckgasbearbeitungssystem 84 umfasst zudem eine Steuereinrichtung 96, welche über eine Steuerleitung 98 oder kabellos mit dem Roboterarm 94 gekoppelt ist.

Das Druckgasbearbeitungssystem 84 umfasst ferner eine Druckgasbereitstellungseinrichtung 102, die über eine Steuerleitung 104 mit der Steuereinrichtung gekoppelt ist. Eine Zufuhrleitung 105 für Druckgas verbindet die Druckgasbereitstellungseinrichtung 102 mit der druckgasbetriebenen Vorrichtung 10, 100 oder 1000.

Die Halteeinrichtung 92 ist automatisiert mittels der Steuereinrichtung 96 ansteuerbar und/oder durch einen Benutzer 106 ansteuerbar, insbesondere durch einen sogenannten Integrator. Das Druckgasbearbeitungssystem 84 umfasst zur Ansteuerung der Halteeinrichtung 92 durch den Benutzer 106 über die Steuereinrichtung 96 eine Bedieneinheit 108, zum Beispiel in Form eines Joysticks, mittels welcher die Halteeinrichtung 92 beim Einlernen, dem sogenannten "Teachen", durch den Benutzer 106 entlang eines zu bearbeitenden Bereiches des Gegenstands 88 bewegbar ist. Alternativ dazu ist die Halteeinrichtung 92 mit der daran angeordneten druckgasbetriebenen Vorrichtung 10, 100 oder 1000 sowie dem Bearbeitungswerkzeug 86 zum Einlernen oder "Teachen" handgeführt durch den Benutzer 106 bewegbar.

Das Druckgasbearbeitungssystem 84 umfasst ergänzend zur oder alternativ zur Hinweiseinrichtung 75 eine optische und/oder akustische Hinweiseinrichtung 110. Mittels dieser ist ein Überschreiten und/oder ein Unterschreiten eines vorgegebenen Schwellenwertes für den Auslenkungszustand der Werkzeugeinheit 12 relativ zu der Aufnahmeeinheit 14 ausgebbar ist und/oder mittels welcher ein Unterschreiten eines vorgegebenen Schwellenwertes für eine Drehzahl des Rotors 20 gegenüber dem Stator 16 der Vorrichtung 10, 100 oder 1000 ausgebbar.

Die Hinweiseinrichtung 110 umfasst vorzugsweise eine Anzeigeeinrichtung 112 mit einer oder mehreren Leuchtdioden (LED), beispielsweise zur Ausgabe farbiger Hinweise wie vorstehend beschrieben. Die Anzeigeeinrichtung 112 ist beispielsweise an der Steuereinrichtung 96 angeordnet. Alternativ oder ergänzend dazu umfasst die Hinweiseinrichtung 110 einen Bildschirm 114, beispielsweise eines Personal Computers (PC) oder einen Bildschirm 116 eines Tablet-Computers 118, welcher durch den Benutzer 106 bedienbar ist.

Vorzugsweise umfasst eine Betriebssoftware des Druckgasbearbeitungssystems 84 mehrere verschiedene Berechtigungsstufen, wobei verschiedenen Benutzern 106 verschiedene Berechtigungsstufen zuteilbar sind. Abhängig von einer zugeteilten Berechtigungsstufe kann einem Benutzer 106 insbesondere Zugriff auf unterschiedliche Funktionsumfänge der Betriebssoftware ermöglicht werden.

Durch die Hinweiseinrichtung 110 können verschiedene Betriebszustände der druckgasbetriebenen Vorrichtung 10, 100 oder 1000 an den Benutzer 106 ausgegeben werden. Beim Einlernen oder "Teachen" können beispielsweise durch an der Anzeigeeinrichtung 112 angeordnete Leuchtdioden verschiedene Farben zur Wiedergabe der Betriebszustände dienen. Die Leuchtdioden können beispielsweise grün leuchten, wenn die druckgasbetriebene Vorrichtung 10, 100 oder 1000 in einem Sollbereich betrieben wird, d.h. wenn die Werkzeugeinheit 12 innerhalb eines Sollbereichs gegenüber der Aufnahmeeinheit 14 ausgelenkt ist. Mit einer gelben Farbe kann einem Benutzer 106 mitgeteilt werden, dass die Werkzeugeinheit 12 gegenüber der Aufnahmeeinheit 14 der Vorrichtung 10, 100 oder 1000 bis an den Rand eines Sollbereichs ausgelenkt ist, wobei durch eine rote Farbe beispielsweise mitgeteilt werden kann, dass die Werkzeugeinheit 12 über einen Sollbereich hinaus gegenüber der Aufnahmeeinheit 14 der Vorrichtung 10, 100 oder 1000 ausgelenkt ist.

Somit kann beim Einlernen oder "Teachen" verhindert werden, dass die druckgasbetriebene Vorrichtung 10, 100 oder 1000 zu stark ausgelenkt wird und somit zerstört wird.

Bei einem automatischen Einlernen oder "Teachen" anhand von beispielsweise CAD-Daten eines Werkstücks 90 kann die Halteeinrichtung 92, insbesondere der Roboterarm 94, vorzugsweise automatisiert und vergleichsweise schnell entlang des Werkstücks 90 bewegt werden. Wenn die druckgasbetriebene Vorrichtung 10, 100 oder 1000 insbesondere ein an dieser angeordnetes Bearbeitungswerkzeug 86, gegen das Werkstück 90 gedrückt wird, wird beispielsweise mittels der Sensoreinrichtung 48 eine Auslenkung der Werkzeugeinheit 12 relativ zu der Aufnahmeeinheit 14 ermittelt und/oder kontrolliert.

Vorzugsweise ist eine beim automatischen Einlernen oder "Teachen" ermittelte Auslenkung für den späteren Serieneinsatz speicherbar, so dass eine Bewegung der Halteeinrichtung 92 aufgrund der beim automatischen Einlernen oder "Teachen" ermittelten Positionierung der Vorrichtung 10, 100 oder 1000 und Auslenkung der Werkzeugeinheit 12 steuerbar und/oder regelbar ist.

Die Halteeinrichtung 92 ist abhängig von dem von der Sensoreinrichtung 48 der druckgasbetriebenen Vorrichtung 10, 100 oder 1000 ermittelten Auslenkungszustand mittels der Steuereinrichtung 96 ansteuerbar. Somit können in einem automatisierten Betrieb fehlerhafte Gegenstände 88 oder Werkstücke 90 sowie verschlissene Bearbeitungswerkzeuge 86 erkannt werden sowie eine fehlerhafte Bedienung vermieden werden.

Günstigerweise kann die druckgasbetriebene Vorrichtung 10, 100 oder 1000 als insbesondere dreidimensionale Messeinrichtung verwendet werden, beispielsweise zur Überwachung einer Position und/oder eines Zustands eines Werkstücks 90 und/oder zur Überwachung einer Position der druckgasbetriebenen Vorrichtung 10, 100 oder 1000. Wenn die druckgasbetriebene Vorrichtung 10, 100 oder 1000 mittels der Halteeinrichtung 92, insbesondere mittels des Roboterarms 94, entlang eines Werkstücks 90 bewegt wird, kann aufgrund einer zu geringen oder einer zu großen ermittelten Auslenkung der Werkzeugeinheit 12 relativ zu der Aufnahmeeinheit 14 auf ein fehlerhaftes Werkstück 90, auf ein falsch positioniertes Werkstück 90 und/oder auf eine fehlerhafte Position der druckgasbetriebenen Vorrichtung 10, 100 oder 1000 geschlossen werden.

### Bezugszeichenliste

- 10: Vorrichtung
- 12: Werkzeugeinheit
- 14: Aufnahmeeinheit
- 16: Stator
- 18: Drehachse
- 20: Rotor
- 22: Anschlussabschnitt
- 24: Druckgasmotor
- 26: Welle
- 28: Lagerelemente
- 30: Antriebsraum
- 32: Antriebselement
- 33: Rückstelleinrichtung
- 34: Lamelle
- 36: Kolben
- 38: Führungshülse
- 40: Führungsrichtung
- 42: Längsachse
- 44: Faltenbalg
- 46: Winkel
- 48: Sensoreinrichtung
- 50: Sensorelement
- 52: 3D-Hall-Sensorelement
- 54: Wirkelement
- 56: Permanentmagnet
- 58: Flanschabschnitt
- 60: gemeinsames Trägerteil
- 62: Platine
- 64: Trägerplatine
- 68: Abdeckteil
- 70: Grundteil
- 72: Speichereinrichtung
- 74: Datenschnittstelle
- 75: Hinweiseinrichtung
- 76: Einlassöffnung
- 77: transluzentes Gehäuseelement
- 78: Pfeil
- 79: Plexiglaselement
- 80: Druckgasanschluss
- 82: Sensoreinheit
- 84: Druckgasbearbeitungssystem
- 85: Fläche
- 86: Bearbeitungswerkzeug
- 87: Ring
- 88: Gegenstand
- 89: Sensoreinheit
- 90: Werkstück
- 92: Halteeinrichtung
- 94: Roboterarm
- 96: Steuereinrichtung
- 98: Steuerleitung
- 100: Vorrichtung
- 102: Druckgasbereitstellungseinrichtung
- 104: Steuerleitung
- 105: Zufuhrleitung
- 106: Benutzer
- 108: Bedieneinheit
- 110: Hinweiseinrichtung
- 112: Anzeigeeinrichtung
- 114: Bildschirm
- 116: Bildschirm
- 118: Tablet-Computer
- 1000: Vorrichtung

## Patentansprüche

1. Druckgasbetriebene Vorrichtung (10; 100; 1000), welche eine Werkzeugeinheit (12) und eine Aufnahmeeinheit (14) zur Aufnahme der Werkzeugeinheit (12) umfasst, wobei die Werkzeugeinheit (12) einen Stator (16) und einen relativ zu dem Stator (16) unter Beaufschlagung mit Druckgas um eine Drehachse (18) drehbar antreibbaren Rotor (20) umfasst, wobei die Werkzeugeinheit (12) relativ zu der Aufnahmeeinheit (14) aus einer mittels der Aufnahmeeinheit (14) vorgebbaren Ausgangsposition in eine oder mehrere Auslenkungspositionen auslenkbar ist, wobei die Vorrichtung (10; 100; 1000) eine Sensoreinrichtung (48) zur Ermittlung eines Auslenkungszustands der Werkzeugeinheit (12) relativ zu der Aufnahmeeinheit (14) umfasst, und wobei mittels der Sensoreinrichtung (48) eine Auslenkungsposition der Werkzeugeinheit (12) relativ zu der Aufnahmeeinheit (14) ermittelbar ist, **dadurch gekennzeichnet, dass** mittels der Sensoreinrichtung (48) eine Auslenkungsrichtung der Werkzeugeinheit (12) relativ zu der Aufnahmeeinheit (14) und eine Drehzahl des Rotors (20) relativ zum Stator (16) ermittelbar ist und dass die Vorrichtung (10; 100; 1000) eine Speichereinrichtung (72) zur Speicherung eines von der Sensoreinrichtung (48) ermittelten Auslenkungszustands und/oder einer von der Sensoreinrichtung (48) ermittelten Drehzahl umfasst.

2. Vorrichtung (10; 100; 1000) nach Anspruch 1, **dadurch gekennzeichnet, dass** die Vorrichtung (10; 100; 1000) einen oder mehrere in der Aufnahmeeinheit (14) längs einer Führungsrichtung (40) bewegbar geführte(n) und mit Druckgas beaufschlagbare(n) Kolben (36) umfasst.

3. Vorrichtung (10; 100; 1000) nach einem der voranstehenden Ansprüche, **dadurch gekennzeichnet, dass** die Sensoreinrichtung (48) ein oder mehrere Sensorelemente (50) und ein oder mehrere Wirkelemente (54) umfasst, wobei ein oder mehrere Wirkelemente (54) oder ein oder mehrere Sensorelemente (50) zur Ermittlung einer Auslenkungsposition und/oder einer Auslenkungsrichtung der Werkzeugeinheit (12) vorzugsweise an einer dem Rotor (20) abgewandten Seite der Werkzeugeinheit (12) angeordnet sind.

4. Vorrichtung (10; 100; 1000) nach Anspruch 3, **dadurch gekennzeichnet, dass** eines der Folgenden gilt:
- ein oder mehrere Wirkelemente (54) sind an der dem Rotor (20) abgewandten Seite der Werkzeugeinheit (12) angeordnet, wobei ein oder mehrere Sensorelemente (50) an der Aufnahmeeinheit (14) angeordnet sind;
- ein oder mehrere Sensorelemente (50) sind an der dem Rotor (20) abgewandten Seite der Werkzeugeinheit (12) angeordnet, wobei ein oder mehrere Wirkelemente (54) an der Aufnahmeeinheit (14) angeordnet sind.

5. Vorrichtung (10; 100; 1000) nach Anspruch 3 oder 4, **dadurch gekennzeichnet, dass** die Sensorelemente (50) und/oder die Wirkelemente (54) jeweils an einem gemeinsamen Trägerteil (60) angeordnet sind.

6. Vorrichtung (10; 100; 1000) nach einem der voranstehenden Ansprüche, **dadurch gekennzeichnet, dass** zumindest eines der Folgenden gilt:
- Sensorelemente (50) der Sensoreinrichtung (48) sind an einer Platine oder Leiterplatte (PCB) angeordnet;
- die Vorrichtung (10; 100; 1000) umfasst eine Datenschnittstelle (74) zur Datenübertragung von Auslenkungszustandsdaten eines durch die Sensoreinrichtung (48) ermittelten Auslenkungszustands der Werkzeugeinheit (12) relativ zu der Aufnahmeeinheit (14) an eine Hinweiseinrichtung (110).

7. Vorrichtung (10; 100; 1000) nach Anspruch 2, **dadurch gekennzeichnet, dass** die Sensoreinrichtung (48) ein oder mehrere Sensorelemente (50) zur Ermittlung einer Position eines oder mehrerer Kolben (36) umfasst, insbesondere zur Ermittlung einer Auslenkungsposition und/oder einer Auslenkungsrichtung der Werkzeugeinheit (12) relativ zu der Aufnahmeeinheit (14).

8. Vorrichtung (10; 100; 1000) nach einem der voranstehenden Ansprüche, **dadurch gekennzeichnet, dass** zumindest eines der Folgenden gilt:
- ein Auslenkungszustand der Werkzeugeinheit (12) relativ zu der Aufnahmeeinheit (14) ist mittels der Sensoreinrichtung (48) diskret oder kontinuierlich ermittelbar;
- mittels der Speichereinrichtung (72) sind von der Sensoreinrichtung (48) ermittelte Auslenkungszustände und/oder Drehzahlen speicherbar, welche einen vorgegebenen Schwellenwert überschreiten und/oder unterschreiten.

9. Vorrichtung (10; 100; 1000) nach einem der Ansprüche 2 bis 8, **dadurch gekennzeichnet, dass** die Werkzeugeinheit (12) entgegen einer Kraft einer Rückstelleinrichtung (33) aus der Ausgangsposition in die eine oder die mehreren Auslenkungspositionen auslenkbar ist und/oder dass die Werkzeugeinheit (12) durch Beaufschlagung des einen oder der mehreren Kolben (36) mit Druckgas in die Ausgangsposition bewegbar ist.

10. Vorrichtung (10; 100; 1000) nach einem der voranstehenden Ansprüche, **dadurch gekennzeichnet, dass** die Werkzeugeinheit (12) in der Ausgangsposition parallel, insbesondere koaxial, zu einer Längsachse (42) der Aufnahmeeinheit (14) angeordnet ist.

11. Vorrichtung (10; 100; 1000) nach einem der voranstehenden Ansprüche, **dadurch gekennzeichnet, dass** die Werkzeugeinheit (12) in einer oder mehreren Auslenkungspositionen relativ zu einer Längsachse (42) der Aufnahmeeinheit (14) verkippt und/oder relativ zu der Aufnahmeeinheit (14) axial in Richtung der Längsachse (42) der Aufnahmeeinheit (14) verschoben ist.

12. Vorrichtung (10; 100; 1000) nach Anspruch 11, **dadurch gekennzeichnet, dass** die Werkzeugeinheit (12) zum Verkippen der Werkzeugeinheit (12) relativ zu der Längsachse (42) der Aufnahmeeinheit (14) in wenigstens einer Ebene, vorzugsweise in wenigstens zwei insbesondere senkrecht zueinander angeordneten Ebenen, bewegbar ist, insbesondere kegelmantelförmig.

13. Vorrichtung (10; 100; 1000) nach einem der voranstehenden Ansprüche, **dadurch gekennzeichnet, dass** zumindest eines der Folgenden gilt:
- die Sensoreinrichtung (48) ist als induktive, kapazitive, optische und/oder magnetische Sensoreinrichtung ausgebildet;
- die Sensoreinrichtung (48) umfasst ein oder mehrere Magnetfeld-Sensorelemente (50) umfasst, vorzugsweise Hall-Sensorelemente, insbesondere 3D-Hall-Sensorelemente (52).

14. Druckgasbearbeitungssystem, umfassend eine druckgasbetriebene Vorrichtung (10; 100; 1000) nach einem der voranstehenden Ansprüche und eine bewegbar ausgebildete und/oder ansteuerbare Halteeinrichtung (92), an welcher die Vorrichtung (10; 100; 1000) vorzugsweise über die Aufnahmeeinheit (14) gehalten ist.

15. Druckgasbearbeitungssystem nach Anspruch 14, **dadurch gekennzeichnet, dass** zumindest eines der Folgenden gilt:
- das Druckgasbearbeitungssystem (84) umfasst eine Steuereinrichtung (96), mittels welcher die Halteeinrichtung (92) automatisiert ansteuerbar ist und/oder mittels welcher die Halteeinrichtung (92) durch einen Benutzer (106) ansteuerbar ist;
- die Halteeinrichtung (92) ist abhängig von dem von der Sensoreinrichtung (48) der druckgasbetriebenen Vorrichtung (10; 100; 1000) ermittelten Auslenkungszustand ansteuerbar;
- das Druckgasbearbeitungssystem (84) umfasst eine optische und/oder akustische Hinweiseinrichtung (110), mittels welcher ein Überschreiten und/oder Unterschreiten eines vorgegebenen Schwellenwertes für den Auslenkungszustand und/oder für eine Drehzahl des Rotors (20) relativ zu dem Stator (16) an einen Benutzer (106) ausgebbar sind;
- das Druckgasbearbeitungssystem (84) umfasst eine mit der Sensoreinrichtung (48) der Vorrichtung (10; 100; 1000) gekoppelte Druckgasbereitstellungseinrichtung (102), mittels welcher abhängig von einem mittels der Sensoreinrichtung (48) ermittelten Drehzustand die Menge und/oder der Druck an Druckgas einstellbar ist.

## Claims

1. Compressed gas-operated apparatus (10; 100; 1000), which comprises a tool unit (12) and a receiving unit (14) for accommodating the tool unit (12), wherein the tool unit (12) comprises a stator (16) and a rotor (20) that is rotatingly drivable about a rotational axis (18) relative to the stator (16) while being applied with compressed gas, wherein the tool unit (12) is deflectable relative to the receiving unit (14) from a starting position that is predeterminable by means of the receiving unit (14) into one or more deflection positions, wherein the apparatus (10; 100; 1000) comprises a sensor device (48) for determining a deflection state of the tool unit (12) relative to the receiving unit (14), and wherein a deflection position of the tool unit (12) relative to the receiving unit (14) is determinable by means of the sensor device (48), **characterized in that** a deflection direction of the tool unit (12) relative to the receiving unit (14) and a rotational speed of the rotor (20) relative to the stator (16) are determinable by means of the sensor device (48) and **in that** the apparatus (10; 100; 1000) comprises a storage device (72) for storing a deflection state determined by the sensor device (48) and/or a rotational speed determined by the sensor device (48).

2. Apparatus (10; 100; 1000) in accordance with Claim 1, **characterized in that** the apparatus (10; 100; 1000) comprises one or more pistons (36), which are guided in the receiving unit (14) so as to be moveable along a guide direction (40) and are configured to be applied with compressed gas.

3. Apparatus (10; 100; 1000) in accordance with any one of the preceding Claims, **characterized in that** the sensor device (48) comprises one or more sensor elements (50) and one or more active elements (54), wherein one or more active elements (54) or one or more sensor elements (50) are preferably arranged on a side of the tool unit (12) remote from the rotor (20) for determining a deflection position and/or a deflection direction of the tool unit (12).

4. Apparatus (10; 100; 1000) in accordance with Claim 3, **characterized in that** one of the following applies:
- one or more active elements (54) are arranged on the side of the tool unit (12) remote from the rotor (20), wherein one or more sensor elements (50) are arranged on the receiving unit (14);
- one or more sensor elements (50) are arranged on the side of the tool unit (12) remote from the rotor (20), wherein one or more active elements (54) are arranged on the receiving unit (14).

5. Apparatus (10; 100; 1000) in accordance with Claim 3 or 4, **characterized in that** the sensor elements (50) and/or the active elements (54) are each arranged on a common support part (60).

6. Apparatus (10; 100; 1000) in accordance with any one of the preceding Claims, **characterized in that** at least one of the following applies:
- sensor elements (50) of the sensor device (48) are arranged on a circuit board (PCB);
- the apparatus (10; 100; 1000) comprises a data interface (74) for the data transmission to an indicating device (110) of deflection state data of a deflection state of the tool unit (12) relative to the receiving unit (14) determined by the sensor device (48).

7. Apparatus (10; 100; 1000) in accordance with Claim 2, **characterized in that** the sensor device (48) comprises one or more sensor elements (50) for determining a position of one or more pistons (36), in particular for determining a deflection position and/or a deflection direction of the tool unit (12) relative to the receiving unit (14).

8. Apparatus (10; 100; 1000) in accordance with any one of the preceding Claims, **characterized in that** at least one of the following applies:
- a deflection state of the tool unit (12) relative to the receiving unit (14) is discretely or continuously determinable by means of the sensor device (48);
- deflection states and/or rotational speeds determined by the sensor device (48) that exceed a predetermined threshold value and/or are below a predetermined threshold value are storable by means of the storage device (72).

9. Apparatus (10; 100; 1000) in accordance with any one of Claims 2 to 8, **characterized in that** the tool unit (12) is deflectable from the starting position into the one or more deflection positions counter to a force of a restoring device (33) and/or **in that** the tool unit (12) is moveable into the starting position by applying the one or more pistons (36) with compressed gas.

10. Apparatus (10; 100; 1000) in accordance with any one of the preceding Claims, **characterized in that** the tool unit (12) in the starting position is arranged in parallel, in particular coaxially, to a longitudinal axis (42) of the receiving unit (14).

11. Apparatus (10; 100; 1000) in accordance with any one of the preceding Claims, **characterized in that** the tool unit (12) in one or more deflection positions is tilted relative to a longitudinal axis (42) of the receiving unit (14) and/or is displaced relative to the receiving unit (14) axially in the direction of the longitudinal axis (42) of the receiving unit (14).

12. Apparatus (10; 100; 1000) in accordance with Claim 11, **characterized in that** the tool unit (12) is moveable, in particular in the shape of a conical surface, in at least one plane, preferably in at least two planes, in particular arranged perpendicularly to each other, for tilting the tool unit (12) relative to the longitudinal axis (42) of the receiving unit (14).

13. Apparatus (10; 100; 1000) in accordance with any one of the preceding Claims, **characterized in that** at least one of the following applies:
- the sensor device (48) is configured as an inductive, capacitive, optical, and/or magnetic sensor device;
- the sensor device (48) comprises one or more magnetic field sensor elements (50), preferably Hall sensor elements, in particular 3D Hall sensor elements (52).

14. Compressed gas machining system, comprising a compressed gas-operated apparatus (10; 100; 1000) in accordance with any one of the preceding Claims and a moveably configured and/or controllable holding device (92), on which the apparatus (10; 100; 1000) is preferably held by way of the receiving unit (14).

15. Compressed gas machining system in accordance with Claim 14, **characterized in that** at least one of the following applies:
- the compressed gas machining system (84) comprises a control device (96), by means of which the holding device (92) is controllable in an automated manner and/or by means of which the holding device (92) is controllable by an operator (106);
- the holding device (92) is controllable in dependence on the deflection state determined by the sensor device (48) of the compressed gas-operated apparatus (10; 100; 1000);
- the compressed gas machining system (84) comprises an optical and/or acoustic indicating device (110), by means of which it can be indicated to an operator (106) when the deflection state and/or a rotational speed of the rotor (20) relative to the stator (16) exceeds a predetermined threshold value and/or is below a predetermined threshold value;
- the compressed gas machining system (84) comprises a compressed gas provisioning device (102) that is coupled to the sensor device (48) of the apparatus (10; 100; 1000), by means of which the amount and/or the pressure of compressed gas is settable in dependence on a rotational state determined by means of the sensor device (48).

## Revendications

1. Dispositif actionné par gaz comprimé (10 ; 100 ; 1000), lequel comprend une unité d'outil (12) et une unité de logement (14) pour le logement de l'unité d'outil (12), l'unité d'outil (12) comprenant un stator (16) et un rotor (20) pouvant être entraîné par rotation autour d'un axe de rotation (18) par rapport au stator (16) sous alimentation en gaz comprimé, où l'unité d'outil (12) peut être déviée par rapport à l'unité de logement (14) à partir d'une position initiale pouvant être prédéfinie au moyen de l'unité de logement (14) dans une ou plusieurs positions de déviation, le dispositif (10 ; 100 ; 1000) comprenant un détecteur (48) pour la détermination d'un état de déviation de l'unité d'outil (12) par rapport à l'unité de logement (14), et une position de déviation de l'unité d'outil (12) par rapport à l'unité de logement (14) pouvant être déterminée au moyen du détecteur (48), **caractérisé en ce qu'**au moyen du détecteur (48) une direction de déviation de l'unité d'outil (12) par rapport à l'unité de logement (14) et une vitesse de rotation du rotor (20) par rapport au stator (16) peuvent être déterminées et **en ce que** le dispositif (10 ; 100 ; 1000) comprend une installation de stockage (72) pour le stockage d'un état de déviation déterminé par le détecteur (48) et/ou d'une vitesse de rotation déterminée par le détecteur (48).

2. Dispositif (10 ; 100 ; 1000) selon la revendication 1, **caractérisé en ce que** le dispositif (10 ; 100 ; 1000) comprend un ou plusieurs pistons (36) introduit(s) en étant déplaçable(s) dans l'unité de logement (14) le long d'une direction d'introduction (40) et pouvant être alimenté(s) en gaz comprimé.

3. Dispositif (10 ; 100 ; 1000) selon l'une des revendications précédentes, **caractérisé en ce que** le détecteur (48) comprend un ou plusieurs éléments de détecteur (50) et un ou plusieurs éléments actifs (54), un ou plusieurs éléments actifs (54) ou un ou plusieurs éléments de détecteur (50) étant disposés pour déterminer une position de déviation et/ou une direction de déviation de l'unité d'outil (12) de préférence sur un côté de l'unité d'outil (12) opposé au rotor (20).

4. Dispositif (10 ; 100 ; 1000) selon la revendication 3, **caractérisé en ce qu'**un des points suivants est satisfait :
- un ou plusieurs éléments actifs (54) sont disposés sur le côté de l'unité d'outil (12) opposé au rotor (20), un ou plusieurs éléments de détecteur (50) étant disposés sur l'unité de logement (14) ;
- un ou plusieurs éléments de détecteur (50) sont disposés sur le côté de l'unité d'outil (12) opposé au rotor (20), un ou plusieurs éléments actifs (54) étant disposés sur l'unité de logement (14).

5. Dispositif (10 ; 100 ; 1000) selon la revendication 3 ou 4, **caractérisé, en ce que** les éléments de détecteur (50) et/ou les éléments actifs (54) sont à chaque fois disposés sur une partie de support commune (60).

6. Dispositif (10 ; 100 ; 1000) selon l'une des revendications précédentes, **caractérisé, en ce qu'**au moins un des points suivants est satisfait :
- des éléments de détecteur (50) du détecteur (48) sont disposés sur une platine ou une carte de circuits imprimés (PCB) ;
- le dispositif (10 ; 100 ; 1000) comprend une interface de données (74) pour le transfert de données des données d'état de déviation d'un état de déviation déterminé par le détecteur (48) de l'unité d'outil (12) par rapport à l'unité de logement (14) sur une installation de référence (110).

7. Dispositif (10 ; 100 ; 1000) selon la revendication 2, **caractérisé, en ce que** le détecteur (48) comprend un ou plusieurs éléments de détecteur (50) pour la détermination d'une position d'un ou plusieurs pistons (36), en particulier pour la détermination d'une position de déviation et/ou d'une direction de déviation de l'unité d'outil (12) par rapport à l'unité de logement (14).

8. Dispositif (10 ; 100 ; 1000) selon l'une des revendications précédentes, **caractérisé, en ce qu'**au moins un des points suivants est satisfait :
- un état de déviation de l'unité d'outil (12) par rapport à l'unité de logement (14) peut être déterminé au moyen du détecteur (48) de manière discrète ou continue ;
- au moyen de l'installation de stockage (72) des états de déviation et/ou des vitesses de rotation déterminés par le détecteur (48) peuvent être stockés, lesquels dépassent vers le haut et/ou vers le bas une valeur de seuil prédéfinie.

9. Dispositif (10 ; 100 ; 1000) selon l'une des revendications 2 à 8, **caractérisé, en ce que** l'unité d'outil (12) peut être déviée contre une force d'une installation de repositionnement (33) à partir de la position initiale dans la une ou les plusieurs positions de déviation et/ou **en ce que** l'unité d'outil (12) peut être déplacée par alimentation de l'un ou des plusieurs pistons (36) en gaz comprimé dans la position initiale.

10. Dispositif (10 ; 100 ; 1000) selon l'une des revendications précédentes, **caractérisé, en ce que** l'unité d'outil (12) est disposée dans la position initiale parallèlement, en particulier coaxialement, par rapport à un axe longitudinal (42) de l'unité de logement (14).

11. Dispositif (10 ; 100 ; 1000) selon l'une des revendications précédentes, **caractérisé, en ce que** l'unité d'outil (12) est basculée dans une ou plusieurs positions de déviation par rapport à un axe longitudinal (42) de l'unité de logement (14) et/ou est poussée par rapport à l'unité de logement (14) axialement dans la direction de l'axe longitudinal (42) de l'unité de logement (14).

12. Dispositif (10 ; 100 ; 1000) selon la revendication 11, **caractérisé, en ce que** l'unité d'outil (12) est déplaçable pour un basculement de l'unité d'outil (12) par rapport à l'axe longitudinal (42) de l'unité de logement (14) dans au moins un plan, de préférence dans au moins deux plans disposés particulièrement perpendiculairement l'un par rapport à l'autre, en particulier en formant un cône.

13. Dispositif (10 ; 100 ; 1000) selon l'une des revendications précédentes, **caractérisé, en ce que** au moins un des points suivants est satisfait :
- le détecteur (48) est formé comme détecteur inductif, capacitif, optique et/ou magnétique ;
- le détecteur (48) comprend un ou plusieurs éléments de détecteur de champ magnétique (50), de préférence éléments de détecteur Hall, en particulier éléments de détecteur Hall 3D (52).

14. Système de traitement par gaz comprimé, comprenant un dispositif actionné par gaz comprimé (10 ; 100 ; 1000) selon l'une des revendications précédentes et une installation de maintien (92) formée en étant déplaçable et/ou pouvant être commandée, sur laquelle le dispositif (10 ; 100 ; 1000) est maintenu de préférence par l'intermédiaire de l'unité de logement (14).

15. Système de traitement par gaz comprimé selon la revendication 14, **caractérisé en ce que** au moins un des points suivants est satisfait :
- le système d'actionnement par gaz comprimé (84) comprend une installation de commande (96), au moyen de laquelle l'installation de maintien (92) peut être commandée de manière automatisée et/ou au moyen de laquelle l'installation de maintien (92) peut être commandée par un utilisateur (106) ;
- l'installation de maintien (92) peut être commandée en fonction de l'état de déviation déterminé par le détecteur (48) du dispositif actionné par gaz comprimé (10; 100 ; 1000) ;
- le système de traitement par gaz comprimé (84) comprend une installation de référence optique et/ou acoustique (110), au moyen de laquelle un dépassement vers le haut et/ou un dépassement vers le bas d'une valeur de seuil prédéfinie pour l'état de déviation et/ou pour une vitesse de rotation du rotor (20) par rapport au stator (16) peuvent être donnés à un utilisateur (106) ;
- le système de traitement par gaz comprimé (84) comprend une installation de préparation de gaz comprimé (102) couplée avec le détecteur (48) du dispositif (10 ; 100 ; 1000), au moyen de laquelle la quantité et/ou la pression de gaz comprimé peut être réglée en fonction d'un état de rotation déterminé au moyen du détecteur (48).
